# EUROPÄISCHE PATENTANMELDUNG

(11) **EP 4 265 546 A1**
(43) Veröffentlichungstag der Anmeldung: **25.10.2023**
(21) Anmeldenummer: 23155942.8
(22) Anmeldetag: 10.02.2023
(51) Int. Cl.: B65G 47/51, B65G 47/53, B65G 47/64, B65G 47/68, B65G 47/71, B65G 47/08

(54) **VORRICHTUNG ZUM ZWISCHENSPEICHERN UND FÖRDERN VON BEHÄLTERN ZUMINDEST IN EINE FÖRDERRICHTUNG**

(30) Priorität: 20.04.2022 DE 102022109584
(71) Anmelder: Krones AG, 93073 Neutraubling (DE)
(72) Erfinder: SEGER, Martin, 93073 Neutraubling (DE); JOGSCH, Michael, 93073 Neutraubling (DE); KAHL, Reiner, 93073 Neutraubling (DE); VERZA, Nicolò, 93073 Neutraubling (DE)
(74) Vertreter: Grünecker Patent- und Rechtsanwälte PartG mbB

(57) **Zusammenfassung**

Die Erfindung betrifft eine Vorrichtung (1, 21, 26, 31) zum Zwischenspeichern und Fördern von Behältern (11) zumindest in eine Förderrichtung umfassend:
- eine mehrzeilige Zwischenspeichervorrichtung (3),
- eine Mehrzahl von in der Förderrichtung stromab der mehrzeiligen Zwischenspeichervorrichtung angeordneten Behälterauslaufgassen (4-10),
- mindestens eine bewegliche Behälterauslaufkulisse (17, 18, 22, 23, 27, 28, 32, 33), die jeweils ausgebildet ist, Behälter von mindestens einer Zeile (13₁-13₂₀) der mehrzeiligen Zwischenspeichervorrichtung aufzunehmen, auszuleiten und auf mehrere der Behälterauslaufgassen zu verteilen.

## Beschreibung

Die Erfindung betrifft eine Vorrichtung zum Zwischenspeichern und Fördern von Behältern zumindest in eine Förderrichtung gemäß Anspruch 1.

### Stand der Technik

DE 10 2017 211 901 A1 offenbart eine Vorrichtung zur Beförderung und zum Zwischenspeichern von Artikeln mit einem Artikeleinlaufstromaufteiler zur Aufteilung eines einspurigen Einkaufstroms auf wenigstens zwei Artikellaufwege und mit jeweils einem den Artikeleinlaufwegen zugeordneten beweglichen Artikeleinlaufverteiler. Der Artikeleinlaufverteiler kann Artikel vom zugeordneten Artikeleinlaufweg auf wenigstens eine Zwischenspeichervorrichtung, beispielsweise ein mehrzeiliger Puffertisch, verteilen.

Für bestimmte Behälterarten kann es erforderlich sein, die Behälter in Gassen zu transportieren und nicht teilweise beispielsweise im Massentransport. Durch das Einbringen der Behälter von Einlaufgassen auf einen mehrzeiligen Puffertisch, das Ausbringen der Behälter aus den mehreren Zeilen in einzelne Gassen kann sich ein großer Platzbedarf für eine solche Anlage ergeben.

### Aufgabe

Die Aufgabe der Erfindung ist es, eine Vorrichtung zur Verfügung zu stellen, die eine platzsparende und preiswerte Zuförderung, Pufferung und Abförderung von Behältern ermöglicht.

### Lösung

Die Aufgabe wird durch die Vorrichtung nach Anspruch 1 gelöst. Bevorzugte Ausführungsformen sind in den Unteransprüchen offenbart.

Die Vorrichtung zum Zwischenspeichern und Fördern von Behältern zumindest in eine Förderrichtung umfasst eine mehrzeilige Zwischenspeichervorrichtung und eine Mehrzahl von in der Förderrichtung stromab der mehrzeiligen Zwischenspeichervorrichtung angeordneten Behälterauslaufgassen. Zudem umfasst die Vorrichtung mindestens eine bewegliche Behälterauslaufkulisse, die jeweils ausgebildet ist, Behälter von mindestens einer Zeile der mehrzeiligen Zwischenspeichervorrichtung aufzunehmen, auszuleiten und auf mehrere der Behälterauslaufgassen zu verteilen.

Mittels der beweglichen Behälterauslaufkulisse ist es möglich, in einer kompakten Bauform der Vorrichtung, Behälter, die in Gassen transportiert werden, von der Zwischenspeichervorrichtung an einspurige Behälterauslaufgassen zu übergeben.

Die mindestens eine bewegliche Behälterauslaufkulisse kann bewegliche Geländer umfassen, um Behälter von einer Zeile auf die mehreren der Behälterauslaufgassen zu verteilen. Beispielsweise können pneumatische Geländer oder Aktoren vorgesehen sein. Behälter, die von einer Zeile durch die Behälterauslaufkulisse aufgenommen und ausgeleitet werden, können durch ein Verstellen der beweglichen Geländer an unterschiedliche Behälterauslaufgassen, vorzugsweise 3 bis 8 Gassen und besonders vorzugsweise 4 bis 6 Gassen, verteilt werden. Es können Behälterauslaufkulissen mit beweglichen Geländern vorgesehen sein, die Behälter an zwei, drei, vier oder mehr Behälterauslaufgassen verteilen können.

Die mindestens eine bewegliche Behälterauslaufkulisse kann parallel zu den Zeilen der mehrzeiligen Zwischenspeichervorrichtung bewegbar ausgebildet sein, um Behälter von einer Zeile auf die mehreren der Behälterauslaufgassen zu verteilen. Eine Bewegung der Behälterkulisse kann dabei um eine Strecke erfolgen, der einer Breite oder einer Mehrzahl der Breite einer Behälterauslaufgasse entspricht.

Die mindestens eine bewegliche Behälterauslaufkulisse kann parallel zu den Behälterauslaufgassen bewegbar ausgebildet sein, um Behälter von mehreren Zeilen auf die mehreren der Behälterauslaufgassen zu verteilen. Eine Bewegung der Behälterkulisse kann dabei um eine Strecke erfolgen, der einer Breite oder einer Mehrzahl der Breite einer Zeile entspricht.

Die mindestens eine bewegliche Behälterauslaufkulisse kann ausgebildet sein, Behälter von einer ersten Anzahl von Zeilen auf die erste Anzahl von Behälterauslaufgassen zu verteilen, wobei die erste Anzahl größer als eins sein kann. Es kann vorgesehen sein, dass die erste Anzahl von Zeilen jeweils benachbart zueinander angeordnet ist. Alternativ kann vorgesehen sein, dass nicht alle Zeilen der ersten Anzahl von Zeilen benachbart zueinander angeordnet sind. Es kann vorgesehen sein, dass die erste Anzahl von Behälterauslaufgassen jeweils benachbart zueinander angeordnet ist. Alternativ kann vorgesehen sein, dass nicht alle Behälterauslaufgassen der ersten Anzahl von Behälterauslaufgassen benachbart zueinander angeordnet sind.

Die Vorrichtung kann weiter mindestens einen Roboter umfassen, der zum Manipulieren der mindestens einen beweglichen Behälterauslaufkulisse ausgebildet sein kann. Das Manipulieren kann ein Bewegen der Behälterauslaufkulisse durch den Roboter in zwei oder drei Raumdimensionen umfassen. Auch ein Bewegen der beweglichen Geländer kann durch den Roboter ausgeführt werden.

Jeweils einer der mindestens einen Roboter kann jeweils einer der mindestens einen beweglichen Behälterauslaufkulisse zugeordnet sein.

Die Vorrichtung kann weiter mindestens eine durch den mindestens einen Roboter ungenutzte bewegliche Behälterauslaufkulisse umfassen. Die ungenutzten beweglichen Behälterauslaufkulissen können beispielsweise verschieden ausgebildet sein und beispielsweise je nach Erfordernis für eine Verwendung in der Vorrichtung zur Verfügung stehen.

Der mindestens eine Roboter kann weiter ausgebildet sein, die ihm zugeordnete bewegliche Behälterauslaufkulisse gegen eine der mindestens einen durch den mindestens einen Roboter ungenutzten beweglichen Behälterauslaufkulisse auszutauschen. Der Roboter kann dazu die ihm zugeordnete Behälterauslaufkulisse, beispielsweise an einem dafür vorgesehenen Ort, absetzen und danach eine ungenutzte Behälterkulisse aufnehmen und dann zum Aufnehmen, Ausleiten und Verteilen von Behältern auf mehrere Behälterauslaufgassen manipulieren.

Die Vorrichtung kann zwei oder mehr mehrzeilige Zwischenspeichervorrichtungen umfassen. So können beispielsweise reduzierte Behältertransportgeschwindigkeiten optimal genutzt werden.

Die Vorrichtung kann mindestens eine Behältereinlaufgasse umfassen, die in der Förderrichtung stromauf der mehrzeiligen Zwischenspeichervorrichtung angeordnet sein kann.

Die Vorrichtung kann mindestens eine bewegliche Behältereinlaufkulisse umfassen, die jeweils ausgebildet sein kann, Behälter von einer der mindestens einen Behältereinlaufgassen aufzunehmen, auszuleiten und an mindestens eine Zeile der mehrzeiligen Zwischenspeichervorrichtung zu übergeben.

Die Vorrichtung kann weiter mindestens einen Roboter umfassen, der zum Manipulieren der mindestens einen beweglichen Behältereinlaufkulisse ausgebildet sein kann. Der Roboter kann baugleich zu dem Roboter ausgebildet sein, der zum Manipulieren der mindestens einen beweglichen Behälterauslaufkulisse ausgebildet sein kann.

Jeweils einer der mindestens einen Roboter kann jeweils einer der mindestens einen beweglichen Behältereinlaufkulisse zugeordnet sein.

Die Vorrichtung kann weiter mindestens eine durch den mindestens einen Roboter ungenutzte bewegliche Behältereinlaufkulisse umfassen. Beispielsweise kann der mindestens eine Roboter weiter ausgebildet sein, die ihm zugeordnete bewegliche Behältereinlaufkulisse gegen eine der mindestens einen durch den mindestens einen Roboter ungenutzten beweglichen Behältereinlaufkulisse auszutauschen. Die ungenutzten beweglichen Behältereinlaufkulissen können beispielsweise verschieden ausgebildet sein und beispielsweise je nach Erfordernis für eine Verwendung in der Vorrichtung zur Verfügung stehen.

Beim Einsatz von zwei beweglichen Behälterauslaufkulissen erfolgt die Positionierung vorzugsweise alternierend, sodass über eine Behälterauslaufkulisse Behälter geführt werden, während die andere Behälterauslaufkulisse bewegt wird und umgekehrt. Bei mehr als zwei Behälterauslaufkulissen gilt analoges. Während über mindestens eine Behälterauslaufkulisse Behälter geführt werden, wird die andere bzw. die anderen Behälterauslaufkulissen bewegt.

### Kurze Figurenbeschreibung

Die beigefügten Figuren stellen beispielhaft zum besseren Verständnis und zur Veranschaulichung Aspekte und/oder Ausführungsbeispiele der Erfindung dar. Es zeigt:
Figur 1 eine erste Ausführungsform der Vorrichtung,
Figur 2 eine zweite Ausführungsform der Vorrichtung,
Figur 3 eine dritte Ausführungsform der Vorrichtung und
Figur 4 eine vierte Ausführungsform der Vorrichtung.

### Ausführliche Figurenbeschreibung

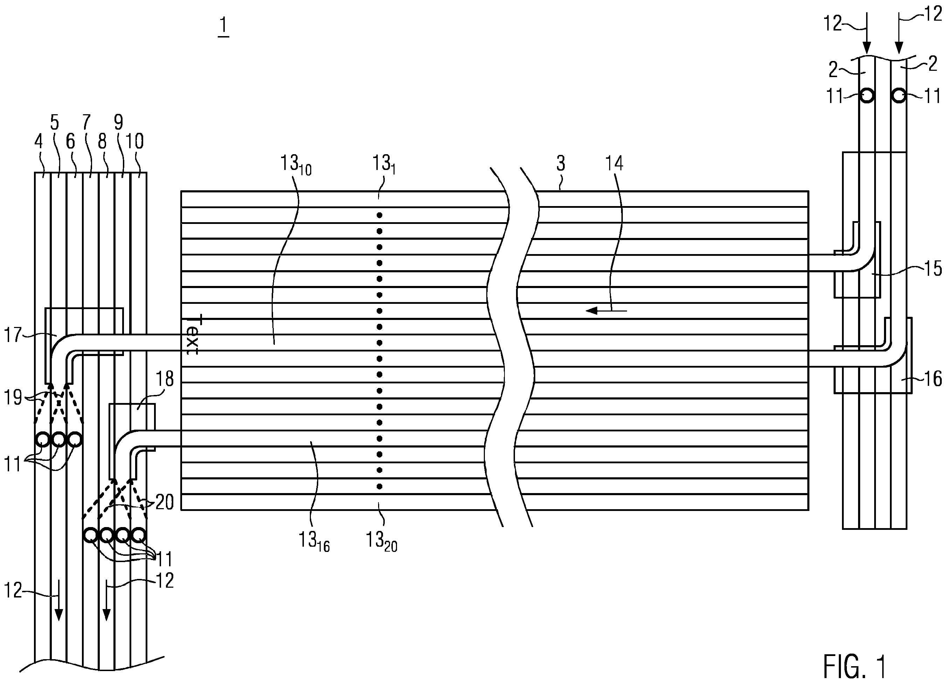

Die Figur 1 zeigt eine erste Ausführungsform der Vorrichtung 1 mit zwei Behältereinlaufgassen, einer mehrzeiligen Zwischenspeichervorrichtung 3 und sieben, parallel angeordneten Behälterauslaufgassen 4, 5, 6, 7, 8, 9, 10. Die Transportrichtung von Behältern 11 kann in den Behältereinlaufgassen 2 und den Behälterauslaufgassen 4-10 in eine erste Richtung 12 und in den Zeilen 13 der mehrzeiligen Zwischenspeichervorrichtung 3 in eine zweite Richtung 14 erfolgen, die quer, hier senkrecht, zu der ersten Richtung 12 verläuft.

Die Vorrichtung 1 umfasst weiter zwei bewegliche Behältereinlaufkulissen 15, 16, die jeweils ausgebildet sind, Behälter 11 von einer der Behältereinlaufgassen 2 aufzunehmen, auszuleiten und an mindestens eine Zeile 13₁-13₂₀ der mehrzeiligen Zwischenspeichervorrichtung 3 zu übergeben. Die Behältereinlaufkulissen 15, 16 können dazu in die erste Richtung 12 oder entgegengesetzt zur ersten Richtung 12 bewegt werden. In der Darstellung ist jeweils eine der beweglichen Behältereinlaufkulissen 15, 16 jeweils einer der Behältereinlaufgassen 2 zugeordnet.

Die Vorrichtung 1 umfasst weiter zwei bewegliche Behälterauslaufkulissen 17, 18, die ausgebildet sind Behälter 11 von einer Zeile 13₁-13₂₀ der mehrzeiligen Zwischenspeichervorrichtung 3 aufzunehmen, auszuleiten und auf mehrere der Behälterauslaufgassen 4-10 zu verteilen. Dazu umfassen die dargestellten Behälterkulissen 17, 18 bewegliche Geländer 19, 20, um Behälter 11 von einer Zeile 13₁-13₂₀ auf mehrere Behälterauslaufgassen 4-10 zu verteilen. Die eine Behälterauslaufkulisse 17 ist ausgebildet, Behälter 11 von einer Zeile 13₁₀ auf drei Behälterauslaufgassen 4-6 zu verteilen, und die andere Behälterauslaufkulisse 18 ist ausgebildet, Behälter 11 von einer Zeile 13₁₆ auf die vier Behälterauslaufgassen 7-10 zu verteilen. Dazu können die beweglichen Geländer 19, 20 der jeweiligen Behälterauslaufkulisse 17, 18 entsprechend bewegt werden, um den Weg eines Behälters 11 in eine der gewünschten drei bzw. vier Behälterauslaufgassen 4-6, 7-10 zu lenken. Es kann auch vorgesehen sein, dass zwei Behälterauslaufkulissen vorgesehen sind, die Behälter von einer Zeile jeweils auf eine gleiche Anzahl von Behälterauslaufgassen verteilen. Um Behälter 11 nacheinander aus unterschiedlichen Zeilen 13₁-13₂₀ aufzunehmen, auszuleiten und auf mehrere der Behälterauslaufgassen 4-10 verteilen zu können, können die Behälterauslaufkulissen 17, 18 in oder entgegengesetzt zu der ersten Richtung 12 bewegt werden.

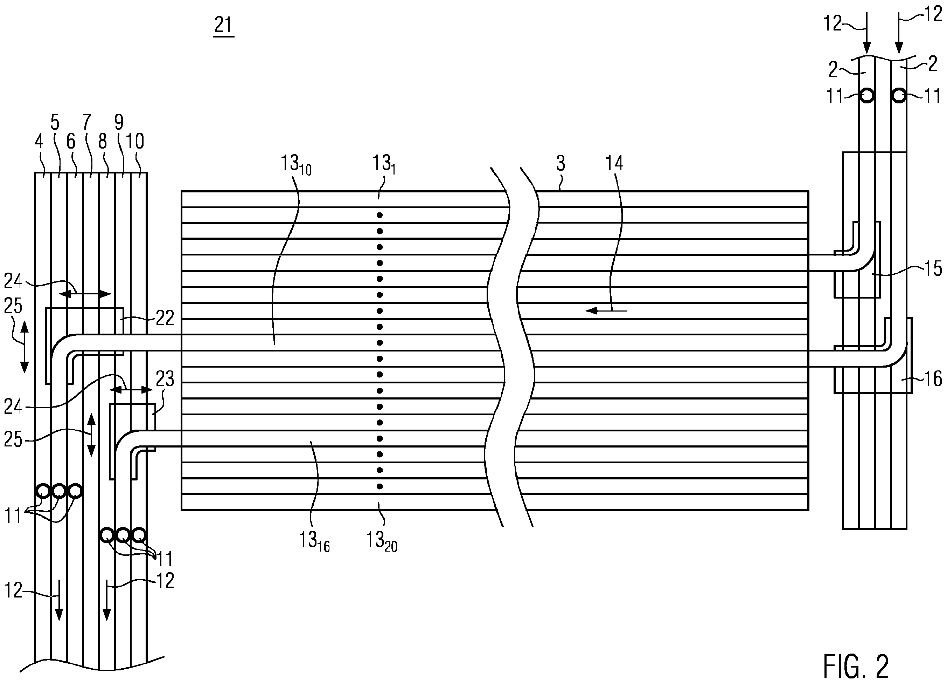

Die Figur 2 zeigt eine zweite Ausführungsform der Vorrichtung 21, wobei Elemente, die bereits hinsichtlich der Figur 1 beschrieben wurden, die gleichen Bezugszeichen aufweisen und nicht noch einmal beschrieben werden. Die beweglichen Behälterauslaufkulissen 22, 23 der zweiten Ausführungsform sind verschieden zu denen der ersten Ausführungsform.

Die beiden beweglichen Behälterauslaufkulissen 22, 23, sind ebenfalls dazu ausgebildet, Behälter 11 von einer Zeile 13₁-13₂₀ der mehrzeiligen Zwischenspeichervorrichtung 3 aufzunehmen, auszuleiten und auf mehrere der Behälterauslaufgassen 4-10 zu verteilen. Dazu sind die Behälterauslaufkulissen 22, 23 in der zweiten Ausführungsform in eine Richtung 24 parallel zu den Zeilen 13₁-13₂₀ der mehrzeiligen Zwischenspeichervorrichtung 3 und in eine Richtung 25 parallel zu den Behälterauslaufgassen 4-10 bewegbar ausgebildet. Es ist vorgesehen, dass jede der Behälterauslaufkulissen 22, 23 Behälter 11 von einer Zeile 13₁₀, 13₁₆ auf drei Behälterauslaufgassen 4-6, 8-10 zu verteilen.

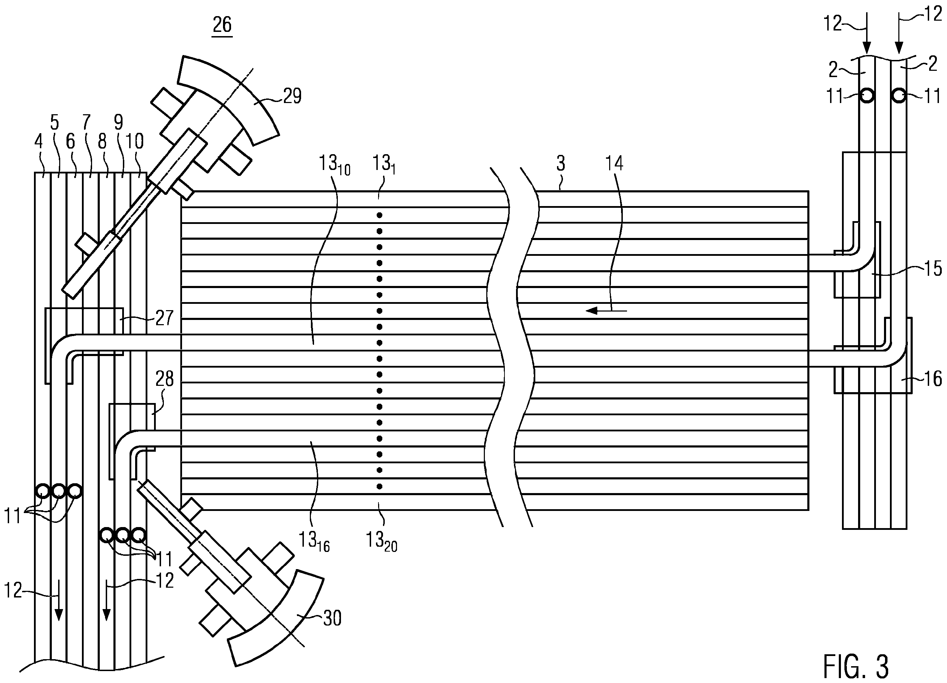

Die Figur 3 zeigt eine dritte Ausführungsform der Vorrichtung 26, wobei Elemente, die bereits hinsichtlich der Figuren 1 und 2 beschrieben wurden, die gleichen Bezugszeichen aufweisen und nicht noch einmal beschrieben werden. Die dargestellte Vorrichtung 26 entspricht im Wesentlichen der zweiten Ausführungsform, wobei aber zusätzlich zwei Roboter 29, 30 umfasst sind. Jeweils ein Roboter 29, 30 ist hierbei einer der beiden Behälterauslaufkulissen 27, 28 zugeordnet, wobei jeder der Roboter 29, 30 zum Manipulieren der ihm zugeordneten Behälterauslaufkulisse 27, 28 ausgebildet ist. Die Roboter 29, 30 können hierzu zumindest in einer Ebene parallel zu einer Transportoberfläche der Zeilen 13₁-13₂₀ der mehrzeiligen Zwischenspeichervorrichtung 3 bewegbar sein, um die Behälterauslaufkulissen 27, 28 beispielsweise in Richtungen parallel zu den Zeilen 13₁-13₂₀ bzw. parallel zu den Behälterauslaufgassen 4-10 bewegen zu können.

Bei einer möglichen Bewegung in den drei Raumdimensionen können die Roboter 29, 30 zudem ausgebildet sein, die ihm zugeordnete Behälterauslaufkulisse 27, 28 gegen eine andere Behälterauslaufkulisse auszutauschen, beispielsweise wenn eine Behälterauslaufkulisse, wie in der Figur 1 beschrieben, verwendet werden soll.

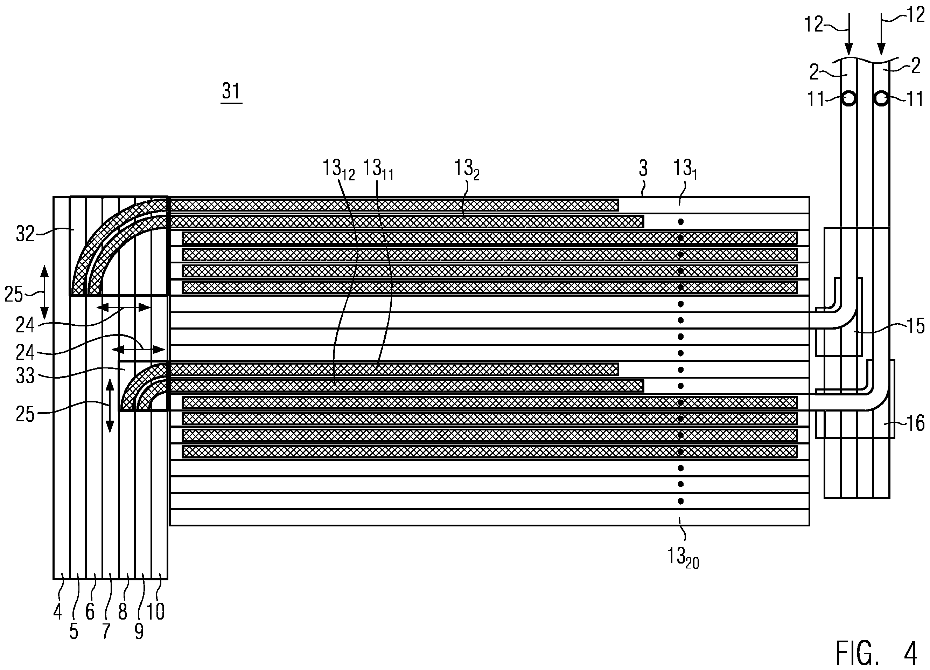

Die Figur 4 zeigt eine vierte Ausführungsform der Vorrichtung 31, wobei Elemente, die bereits hinsichtlich der Figuren 1, 2 und 3 beschrieben wurden, die gleichen Bezugszeichen aufweisen und nicht noch einmal beschrieben werden.

Die beiden Behälterauslaufkulissen 32, 33 unterscheiden sich von denen, die hinsichtlich der ersten bis dritten Ausführungsformen beschrieben wurden. Jede der Behälterauslaufkulissen 32, 33 ist ausgebildet, Behälter 11 von jeweils zwei benachbarten Zeilen 13₁, 13₂; 13₁₁, 13₁₂ der mehrzeiligen Zwischenspeichervorrichtung 3 auf jeweils zwei benachbarte Behälterauslaufgassen 5, 6; 8, 9 zu verteilen. Um Behälter 11 von verschiedenen zwei benachbarten Zeilen 13₁-13₂₀ auf zwei benachbarte Behälterauslaufgassen 4-10 verteilen zu können, können die Behälterauslaufkulissen 32, 33 in die Richtung 25 parallel zu den Behälterauslaufgassen 4-10 bewegt werden. Um Behälter 11 von zwei benachbarten Zeilen 13₁-13₂₀ auf verschiedene zwei benachbarte Behälterauslaufgassen 4-10 verteilen zu können, können die Behälterauslaufkulissen 32, 33 in die Richtung 24 parallel zu den Zeilen 13₁-13₂₀ bewegt werden.

## Patentansprüche

1. Vorrichtung (1, 21, 26, 31) zum Zwischenspeichern und Fördern von Behältern (11) zumindest in eine Förderrichtung umfassend:
- eine mehrzeilige Zwischenspeichervorrichtung (3),
- eine Mehrzahl von in der Förderrichtung stromab der mehrzeiligen Zwischenspeichervorrichtung (3) angeordneten Behälterauslaufgassen (4, 5, 6, 7, 8, 9, 10),
- mindestens eine bewegliche Behälterauslaufkulisse (17, 18, 22, 23, 27, 28, 32, 33), die jeweils ausgebildet ist, Behälter (11) von mindestens einer Zeile (13₁-13₂₀) der mehrzeiligen Zwischenspeichervorrichtung (3) aufzunehmen, auszuleiten und auf mehrere der Behälterauslaufgassen (4-10) zu verteilen.

2. Die Vorrichtung nach Anspruch 1, wobei die mindestens eine bewegliche Behälterauslaufkulisse (17, 18) bewegliche Geländer (19, 20) umfasst, um Behälter (11) von einer Zeile (13₁-13₂₀) auf die mehreren der Behälterauslaufgassen (4-10) zu verteilen, wobei beispielsweise pneumatische Geländer oder Aktoren vorgesehen sind.

3. Die Vorrichtung nach Anspruch 1 oder 2, wobei die mindestens eine bewegliche Behälterauslaufkulisse (17, 18, 22, 23, 27, 28, 32, 33) in eine Richtung (24) parallel zu den Zeilen (13₁-13₂₀) der mehrzeiligen Zwischenspeichervorrichtung (3) bewegbar ausgebildet ist, um Behälter (11) nacheinander von einer Zeile (13₁-13₂₀) auf die mehreren der Behälterauslaufgassen (4-10) zu verteilen.

4. Die Vorrichtung nach einem der Ansprüche 1 bis 3, wobei die mindestens eine bewegliche Behälterauslaufkulisse (22, 23, 27, 28, 32, 33) in eine Richtung (25) parallel zu den Behälterauslaufgassen (4-10) bewegbar ausgebildet ist, um Behälter (11) nacheinander von mehreren Zeilen (13₁-13₂₀) auf die mehreren der Behälterauslaufgassen (4-10) zu verteilen.

5. Die Vorrichtung nach einem der Ansprüche 1 bis 4, wobei die mindestens eine bewegliche Behälterauslaufkulisse (32, 33) ausgebildet ist, Behälter (11) von einer ersten Anzahl von Zeilen (13₁-13₂₀) auf die erste Anzahl von Behälterauslaufgassen (4-10) zu verteilen, wobei die erste Anzahl größer als eins ist.

6. Die Vorrichtung nach einem der Ansprüche 1 bis 5, weiter umfassend mindestens einen Roboter (29, 30), der zum Manipulieren der mindestens einen beweglichen Behälterauslaufkulisse (17, 18, 22, 23, 27, 28, 32, 33) ausgebildet ist.

7. Die Vorrichtung nach Anspruch 6, wobei jeweils einer der mindestens einen Roboter (29, 30) jeweils einer der mindestens einen beweglichen Behälterauslaufkulisse (17, 18, 22, 23, 27, 28, 32, 33) zugeordnet ist.

8. Die Vorrichtung nach Anspruch 6 oder 7, weiter umfassend mindestens eine durch den mindestens einen Roboter (29, 30) ungenutzte bewegliche Behälterauslaufkulisse.

9. Die Vorrichtung nach Anspruch 8, wobei der mindestens eine Roboter (29, 30) weiter ausgebildet ist, die ihm zugeordnete bewegliche Behälterauslaufkulisse (17, 18, 22, 23, 27, 28, 32, 33) gegen eine der mindestens einen durch den mindestens einen Roboter (29, 30) ungenutzten beweglichen Behälterauslaufkulisse auszutauschen.

10. Die Vorrichtung nach einem der Ansprüche 1 bis 9, umfassend zwei oder mehr mehrzeilige Zwischenspeichervorrichtungen (3).

11. Die Vorrichtung nach einem der Ansprüche 1 bis 10, umfassend mindestens eine Behältereinlaufgasse (2), die in der Förderrichtung stromauf der mehrzeiligen Zwischenspeichervorrichtung (3) angeordnet ist.

12. Die Vorrichtung nach Anspruch 11, umfassend mindestens eine bewegliche Behältereinlaufkulisse (15, 16), die jeweils ausgebildet ist, Behälter (11) von einer der mindestens einen Behältereinlaufgassen (2) aufzunehmen, auszuleiten und an mindestens eine Zeile (13₁-13₂₀) der mehrzeiligen Zwischenspeichervorrichtung (3) zu übergeben.

13. Die Vorrichtung nach Anspruch 11 oder 12, weiter umfassend mindestens einen Roboter, der zum Manipulieren der mindestens einen beweglichen Behältereinlaufkulisse (15, 16) ausgebildet ist.

14. Die Vorrichtung nach Anspruch 13, wobei jeweils einer der mindestens einen Roboter jeweils einer der mindestens einen beweglichen Behältereinlaufkulisse (15, 16) zugeordnet ist.

15. Die Vorrichtung nach Anspruch 13 oder 14, weiter umfassend mindestens eine durch den mindestens einen Roboter ungenutzte bewegliche Behältereinlaufkulisse (15, 16), wobei beispielsweise der mindestens eine Roboter weiter ausgebildet ist, die ihm zugeordnete bewegliche Behältereinlaufkulisse (15, 16) gegen eine der mindestens einen durch den mindestens einen Roboter ungenutzten beweglichen Behältereinlaufkulisse auszutauschen.
